(19) Europäisches Patentamt
European Patent Office
Office européen des brevets

(11) Veröffentlichungsnummer: **0 106 250**
**B1**

(12) # EUROPÄISCHE PATENTSCHRIFT

(45) Veröffentlichungstag der Patentschrift: **18.12.85**

(51) Int. Cl.⁴: **B 01 D 53/34,** C 01 B 25/20

(21) Anmeldenummer: **83109844.7**

(22) Anmeldetag: **01.10.83**

(54) **Verfahren zur Entfernung von Stickstoffdioxid aus Abgasen.**

(30) Priorität: **16.10.82 DE 3238423**

(43) Veröffentlichungstag der Anmeldung: **25.04.84 Patentblatt 84/17**

(45) Bekanntmachung des Hinweises auf die Patenterteilung: **18.12.85 Patentblatt 85/51**

(84) Benannte Vertragsstaaten: **BE DE FR GB IT NL**

(56) Entgegenhaltungen:
**DE - C - 524 184**

**BERICHTE DER DEUTSCHEN CHEMISCHEN GESELLSCHAFT Jahrgang 43, Band II 1910, KOMMISSIONSVERLAG VON R. FRIEDLÄNDER & SOHN, Berlin Seite 2006**
**ZEITSCHRIFT FÜR ANORGANISCHE UND ALLGEMEINE CHEMIE, Band 304 1960, BARTH-VERLAG, Leipzig H. REMY et al. "Untersuchungen über die Oxidation von rotem Phosphor in wässrigen Medium", Seiten 211-215**

(73) Patentinhaber: **HOECHST AKTIENGESELLSCHAFT, Postfach 80 03 20, D-6230 Frankfurt am Main 80 (DE)**

(72) Erfinder: **Lehr, Klaus, Dr., Am grünen Weg 10, D-5030 Hürth (DE)**
Erfinder: **Heymer, Gero, Dr., Fasanenaue 12, D-5042 Erftstadt (DE)**

**EP 0 106 250 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft ein Verfahren zur Entfernung von Stickstoffdioxid aus Abgasen.

Stickstoffdioxidhaltige Abgase fallen bei industriellen und technischen Prozessen an. Im Zuge verstärkter Umweltschutzmassnahmen wird die Verringerung der Emission von Stickstoffdioxid in die Luft gefordert.

Es ist bekannt, Stickstoffdioxid aus Abgasen mit Wasser zu Salpetersäure umzusetzen, wobei jedoch das nach der Gleichung

$$3\ NO_2 + H_2O \longrightarrow 2\ HNO_3 + NO$$

freiwerdende Stickstoffmonoxid nur unter Aufwendung grosser Wassermengen physikalisch gelöst und ausgewaschen werden kann (vergl. „Ullmanns Encyklopädie der technischen Chemie", 4. Aufl., 1981, Bd. 6, S. 170 bis 174).

Stickstoffdioxid wird durch wässerige Natronlauge unter Bildung einer Nitrit-/Nitratlösung absorbiert. Die Nitrit-/Nitratlösung darf auf keinen Fall ins Abwasser abgegeben werden; sie muss vielmehr entweder verwertet oder schadlos beseitigt werden (vergl. VDI-Richtlinie 2295 (Entwurf), Februar 1982, S. 6 und 7).

Schliesslich kann Stickstoffdioxid mit Hilfe von Ammoniak an $V_2O_5$-Katalysatoren bei Temperaturen von 250 bis 300° C zu Stickstoff reduziert werden. Dabei weist das umgesetzte Gasgemisch noch etwa 120 ppm $NO_x$ auf (vergl. „Chemie-Ingenieur-Technik", 47. Jahrgang (1975) S. 1021).

Bei den bekannten Verfahren ist nachteilig, dass entweder das Abluftproblem in ein Abwasserproblem umgewandelt wird oder wegen des Ablaufes der Reduktiion nur bei höheren Temperaturen ein beträchtlicher Energieaufwand erforderlich ist.

Es ist daher Aufgabe der vorliegenden Erfindung, ein Verfahren zur Entfernung von Stickstoffdioxid aus Abgasen anzugeben, bei welchem keine nichtverwendbaren Substanzen anfallen und welches möglichst bei Raumtemperatur abläuft. Das wird erfindungsgemäss dadurch erreicht, dass die Abgase in innigen Kontakt mit einer Suspension gebracht werden, welche aus rotem Phosphor und einer gegenüber rotem Phosphor inerten Flüssigkeit besteht.

Das Verfahren gemäss der Erfindung kann weiterhin wahlweise auch noch dadurch ausgestaltet sein, dass

a) roter Phosphor mit einer Körnung bis 4 mm eingesetzt ist;

b) als gegenüber rotem Phosphor inerte Flüssigkeit Wasser verwendet ist;

c) die Abgase mit der Suspension unter Druck in innigen Kontakt gebracht werden.

Beim erfindungsgemässen Verfahren wird Stickstoffdioxid bereits drucklos zu Stickstoff und Spuren von Distickstoffoxid reduziert.

Bei der erfindungsgemässen Umsetzung wird der rote Phosphor im Molverhältnis 1:1 zu phosphoriger Säure und Phosphorsäure oxidiert. Dabei können in der Suspension Säurekonzentrationen von mehr als 30 Gew.-% auftreten, ohne dass dadurch die Redoxreaktion negativ beeinflusst wird.

Beim Verfahren gemäss der Erfindung ist die in der Suspension anfallende Säure nach Abtrennung des roten Phosphors problemlos verwendbar, beispielsweise in der Düngemittelindustrie, Mithin fallen bei diesem Verfahren keine Abfallstoffe an, welche aufwendig beseitigt bzw. deponiert werden müssen.

Das erfindungsgemässe Verfahren kann kontinuierlich oder diskontinuierlich durchgeführt werden.

Die Apparatur zur Durchführung des Verfahrens gemäss der Erfindung muss so ausgebildet sein, dass zur Ermöglichung eines innigen Kontaktes zwischen den in der Flüssigkeit suspendierten roten Phosphor und dem stickstoffdioxidhaltigen Abgas sehr feine Gasperlen erzeugt werden. Zur Erzeugung solcher Gasperlen sind Begasungsrührer und von unten angeströmte Gasverteilungsböden, beispielsweise Fritten oder engmaschige Gewebe, besonders geeignet. Es können aber auch Kolonnen, beispielsweise Füllkörperkolonnen, verwendet werden, in welchem sich das stickstoffdioxidhaltige Abgas und der in der Flüssigkeit suspendierte rote Phosphor im Gegenstrom zueinander bewegen. Schliesslich kann durch Hintereinanderschaltung mehrerer der genannten Einheiten, beispielsweise zu Kaskaden, die Entfernung des Stickstoffdioxids aus dem Abgas verbessert werden.

Die folgenden Beispiele geben die mit dem erfindungsgemässen Verfahren erzielbaren Ergebnisse wieder.

*Beispiel 1:*

Es wurde ein Reaktor verwendet, der aus einem zylindrischen Glasgefäss (80 mm Durchmesser, 300 mm hoch) bestand, in welchem ein Frittenboden (D1) angeordnet war. Oberhalb des Frittenbodens befand sich eine aus 500 ml Wasser und 100 g rotem Phosphor (Körnung: 95% <0,4 mm; Hoechst AG, Werk Knapsack) bestehende Suspension, während durch den Frittenboden von unten her 100 l/h mit Stickstoffdioxid beladener Stickstoff gedrückt wurde. Dabei bildeten sich oberhalb des Frittenbodens sehr feinteilige Gasblasen aus, welche in die Flüssigkeit aufstiegen. Die Probenahme erfolgte nach 20 min.

*Analyse:*
Vor Reaktor: 208 mg $NO_2$/l (≙ 63 mg N/l)
Nach Reaktor: 9,9 mg N/l (als $NO_2$ + NO)
Umsatz: 84%
Temperatur: 22 bis 24° C

*Beispiel 2:*

Beispiel 1 wurde mit den Änderungen wiederholt, dass mit mehr Stickstoffdioxid beladener Stickstoff in den Reaktor gedrückt wurde und dass die Probenahme nach 30 min erfolgte.

*Analyse:*
Vor Reaktor: 320 mg $NO_2$/l (≙97 mg N/l)
Nach Reaktor: 13,1 mg N/l (als $NO_2$ + NO)
Umsatz: 87%
Temperatur: 21 bis 25° C

*Beispiel 3:*

Beispiel 1 wurde mit den Änderungen wiederholt, dass mit weniger Stickstoffdioxid beladener Stickstoff in den Reaktor gedrückt wurde und dass die Probenahme nach 40 min erfolgte.

*Analyse:*
Vor Reaktor: 24,5 mg $NO_2$/l (≙7,4 mg N/l)
Nach Reaktor: 0,9 mg N/l (als $NO_2$ + NO)
Umsatz: 88%
Temperatur: 24 bis 26° C

*Beispiel 4:*

Beispiel 3 wurde mit den Änderungen wiederholt, dass die wässerige Suspension des roten Phosphors vor Durchleiten des Gasgemisches durch Zugabe von Phosphorsäure auf pH 1,8 eingestellt wurde und dass die Probenahme nach 36 min erfolgte.

*Analyse:*
Vor Reaktor: 27,8 mg $NO_2$/l (≙8,3 mg N/l)
Nach Reaktor: 0,9 mg N/l (als $NO_2$ + NO)
0,9 mg N/l (als $N_2O$)
Umsatz: 89%
Temperatur: 24 bis 26° C

Bei der Umsetzberechnung wurde die nachgewiesene Menge Distickstoffoxid nicht berücksichtigt, da Distickstoffoxid in dieser Konzentration nicht schädlich ist.

*Beispiel 5:*

Beispiel 1 wurde mit den Änderungen wiederholt, dass die wässerige Suspension des roten Phosphors vor Durchleiten des Gasgemisches durch Zugabe von Phosphorsäure auf pH 0,6 eingestellt wurde und dass die Probenahme nach 15 min erfolgte.

*Analyse:*
Vor Reaktor: 217 mg $NO_2$/l (≙66,1 mg N/l)
Nach Reaktor: 4,8 mg N/l (als $NO_2$ + NO)
17,2 mg N/l (als $N_2O$)
Umsatz: 98%
Temperatur: 30 bis 53° C

Distickstoffoxid wurde bei der Umsatzberechnung nicht berücksichtigt (vergl. Beispiel 4).

*Beispiel 6:*

Es wurde ein Reaktor verwendet, welcher aus einem zylidrischen Glasgefäss (100 mm Durchmesser, 900 mm hoch) bestand, in dem ein grobporiger Frittenboden angeordnet war. Oberhalb des Frittenbodens befand sich ein aus 4 l Wasser und 800 g rotem Phosphor (Körnung: 95% <0,4 mm; Hoechst AG, Werk Knapsack) bestehende Suspension, während durch den Frittenboden von unten her 2400 l/h mit Stickstoffdioxid beladene Luft gedrückt wurde. Die Probenahme erfolgte nach 30 min.

*Analyse:*
Vor Reaktor: 2000 Vol.-ppm $NO_2$
Nach Reaktor: 560 Vol.-ppm $NO_2$
Umsatz: 72%
Temperatur: 24° C

Füllt man anstelle der wässerigen Suspension mit rotem Phosphor in den Reaktor 4 l Wasser ein, so beträgt der Umsatz unter den gleichen Reaktionsbedingungen nur 44%.

*Beispiel 7:*

Zwei der im Beispiel 1 beschriebenen, thermostatisierten Reaktoren, welche jeweils mit einer Suspension aus 100 g rotem Phosphor (Körnung: 95% <0,4 mm; Hoechst AG, Werk Knapsack) in 500 ml Wasser gefüllt waren, wurden hintereinander geschaltet. Durch beide Reaktoren wurden 100 l/h mit Stickstoffdioxid beladener Stickstoff gedrückt. Die Probenahme erfolgte nach 60 min.

*Analyse:*
Vor Reaktor I: 380 mg $NO_2$/l (≙116 mg N/l)
Nach Reaktor I: 18,6 mg N/l (als $NO_2$ + NO)
Umsatz: 84%

*Analyse:*
Vor Reaktor II: 18,6 mg N/l (als $NO_2$+NO)
Nach Reaktor II: 9,1 mg N/l (als $NO_2$+NO)
Umsatz: 51%
Gesamtumsatz: 92%
Temperatur: 23° C

## Patentansprüche

1. Verfahren zur Entfernung von Stickstoffdioxid aus Abgasen, dadurch gekennzeichnet, dass die Abgase in innigen Kontakt mit einer Suspension gebracht werden, welche aus rotem Phosphor und einer gegenüber rotem Phosphor inerten Flüssigkeit besteht.
2. Verfahren nach Anspruch 1, dadurch gekennzeichnet, dass roter Phosphor mit einer Körnung bis 5 mm eingesetzt ist.
3. Verfahren nach Anspruch 1 oder 2, dadurch gekennzeichnet, dass als gegenüber rotem Phosphor inerte Flüssigkeit Wasser verwendet ist.
4. Verfahren nach einem der Ansprüche 1 bis 3, dadurch gekennzeichnet, dass die Abgase mit der Suspension unter Druck in innigen Kontakt gebracht werden.

## Claims

1. Process for removing nitrogen dioxide from off-gas which comprises intimately contacting the off-gas with a suspension of red phosphorus and a liquid inert with respect to red phosphorus.
2. Process as claimed in Claim 1, wherein red phosphorus with a particle size of up to 5 mm is used.
3. Process as claimed in Claim 1 or 2, wherein water is used as the liquid inert with respect to phosphorus.
4. Process as claimed in any of Claims 1 to 3, wherein the off-gas is intimately contacted with the suspension under pressure.

## Revendications

1. Procédé d'élimination de peroxyde d'azote à partir de gaz résiduaires, caractérisé en ce que l'on met les gaz résiduaires en contact intime avec une suspension consistant en phosphore rouge et un liquide inerte vis-à-vis du phosphore rouge.

2. Procédé selon la revendication 1, caractérisé en ce que le phosphore rouge présente une granulométrie allant jusqu'à 5 mm.

3. Procédé selon l'une des revendications 1 ou 2, caractérisé en ce que l'on utilise l'eau comme liquide inerte vis-à-vis du phosphore rouge.

4. Procédé selon l'une des revendications 1 à 3, caractérisé en ce que l'on met les gaz résiduaires en contact intime avec la suspension sous pression.